(19) Europäisches Patentamt
European Patent Office
Office européen des brevets

(11) **EP 1 668 723 B1**

(12) **EUROPEAN PATENT SPECIFICATION**

(45) Date of publication and mention
of the grant of the patent:
**26.11.2008 Bulletin 2008/48**

(51) Int Cl.:
*H01M 4/86* (2006.01)    *H01M 8/12* (2006.01)

(21) Application number: **03769342.1**

(22) Date of filing: **30.09.2003**

(86) International application number:
**PCT/EP2003/010821**

(87) International publication number:
**WO 2005/041329 (06.05.2005 Gazette 2005/18)**

(54) **SOLID OXIDE FUEL CELL**

FESTOXIDBRENNSTOFFZELLE

PILE A COMBUSTIBLE OXYDE SOLIDE

(84) Designated Contracting States:
**AT BE BG CH CY CZ DE DK EE ES FI FR GB GR HU IE IT LI LU MC NL PT RO SE SI SK TR**

(43) Date of publication of application:
**14.06.2006 Bulletin 2006/24**

(73) Proprietor: **Pirelli & C. S.p.A.**
**20123 Milano (IT)**

(72) Inventors:
• **SIN XICOLA, Agustin**
**I-20040 Carnate (IT)**
• **ALBIZZATI, Enrico**
**I-28040 Lesa (IT)**
• **ARICO, Antonino, Salvatore**
**I-98125 Contesse (ME) (IT)**
• **GULLO, Laura, Rosalba**
**I-98125 Messina (IT)**
• **LA ROSA, Daniela**
**I-98055 Lipari (IT)**
• **ANTONUCCI, Vincenzo**
**Isolato 467,**
**I-98121 Messina (IT)**
• **DUBITSKY, Yuri A.**
**20159 Milano (MI) (IT)**

(74) Representative: **Bottero, Claudio et al**
**Porta, Checcacci & Associati S.p.A.**
**Via Trebbia, 20**
**20135 Milano (IT)**

(56) References cited:

• **DUSASTRE V ET AL: "Optimisation of composite cathodes for intermediate temperature SOFC applications" SOLID STATE IONICS, DIFFUSION & REACTIONS, NOV. 1999, ELSEVIER, NETHERLANDS, vol. 126, no. 1-2, pages 163-174, XP002276930 ISSN: 0167-2738**
• **WANG S ET AL: "Performance of a La0.6Sr0.4Co0.8Fe0.2O3-Ce0.8Gd0.2O1.9-Ag cathode for ceria electrolyte SOFCs" SOLID STATE IONICS, NORTH HOLLAND PUB. COMPANY. AMSTERDAM, NL, vol. 146, no. 3-4, 2 February 2002 (2002-02-02), pages 203-210, XP004335374 ISSN: 0167-2738**
• **YASUMOTO K ET AL: "An (La,Sr)(Co,Cu)O3-delta cathode for reduced temperature SOFCs" SOLID STATE IONICS, NORTH HOLLAND PUB. COMPANY. AMSTERDAM, NL, vol. 148, no. 3-4, June 2002 (2002-06), pages 545-549, XP004358570 ISSN: 0167-2738**
• **ZHITOMIRSKY I ET AL: "Electrophoretic deposition of ceramic materials for fuel cell applications" JOURNAL OF THE EUROPEAN CERAMIC SOCIETY, ELSEVIER SCIENCE PUBLISHERS, BARKING, ESSEX, GB, vol. 20, no. 12, November 2000 (2000-11), pages 2055-2061, XP004216162 ISSN: 0955-2219**
• **WESTON M., METCALFE I.S.: "La0.6Sr0.4Co0.2Fe0.8O3 as an anode for direct methane activation in SOFCS" SOLID STATE IONICS, vol. 113-115, 1998, pages 247-251, XP004153302**
• **HARTLEY A., SAHIBZADA M., WESTON M., METCALFE I.S., MANTZAVINOS D.: "La0.6Sr0.4Co0.2Fe0.8O3 as the anode and cathode for intermediate temperature solid oxide fuel cells" CATALYSIS TODAY, vol. 55, 2000, pages 197-204, XP007903012**

**Description**

The present invention relates to a solid oxide fuel cell and to a method for producing energy by means of a solid oxide fuel cell.

Solid-oxide fuel cells (SOFCs) convert chemical energy into electrical energy with high efficiency and low emission of pollutants. Although the introduction of a "green energy" might seem an attractive scenario, its implementation is beset with technical and economic difficulties.

Common anodes materials for solid oxide fuel cells comprise nickel (Ni) cermets (ceramic and metallic composite materials) with ceramic powders such as yttria-stabilized zirconia (YSZ) or gadolinia-doped ceria (CGO). Ni-cermets perform with $H_2$ fuels and allow internal steam reforming of hydrocarbons if sufficient water is fed to the anode. As Ni catalyzes the formation of graphite fibers in dry methane, it is necessary to operate anodes at steam/ methane ratios greater than 3, as from WO 00/52780 (in the name of Gas Research Institute).

The use of nickel as the metallic component of a cermet anode is advantageous, but its performance drops in short time, especially when fuelled with a dry hydrocarbon, due to graphite formation.

In addition, the poor redox tolerance of nickel cermets precludes many medium- and small-scale applications. Thus there is a considerable interest in finding alternative anode system, as reported by S. Tao e J.T.S Irvine, Nature Materials, 2, 320-323, 2003.

This article relates to a redox-stable efficient anode for SOFC, and investigates complex perovskites based upon Cr and one or more other transition elements (M) such as V, Mn, Fe, Co, Ni, Cu forming compositions (La, $Sr)_2M_{1-x}Cr_{1+x}O_{6-\delta}$. Samples containing about 50% Co, Ni or Cu were unstable under fuel conditions, with very significant exsolution of metal. This is not surprising because these oxides are unstable, with reduction to the metal under fuel conditions. The stability limit for FeO is very close to fuel conditions; hoever, MnO is clearly stable under fuel conditions. LSCM ($La_{0.75}Sr_{0.25}Cr_{0.5}Mn_{0.5}O_3$) is demonstrated as a Ni-free single-phase anode with comparable performance in hydrogen to nickel-YSZ cermets. In contrast with this cermets, the electrode is active for electro-oxidation of $CH_4$ at high temperature in the absence of excess steam ($CH_4$+ 3%$H_2O$).

Perovskite materials are known in the art as being effective as cathode material for SOFC. For example, V.V. Kharton et al., Journal of Materials Science, 36 (2001), 1105-1117 disclose the electrochemical activity of CG020 (ceria doped with gadolinia at 20% by mole) electrolyte in contact with cathode of perovskité-type $La_{0.8}Sr_{0.2}Fe_{0.8}CO_{0.2}O_{3-\delta}$.

The use of $La_{0.6}Sr_{0.4}Co_{0.2}Fe_{0.8}O_3$ as a prospective anode material that can effectively operate using methane at reduced temperatures without a degradation in performance of solid oxide fuel cell has been disclosed by M.Weston et al. in Solid State Ionics, vol. 113-115, 1998, pages 247-251.

In addition, the perovskite material $La_{0.6}Sr_{0.4}CO_{0.2}Fe_{0.8}O_3$ has been considered as both anode and cathode in solid oxide fuel cells operating at intermediate temperatures (550°C-700°C) by A. Hartley et al. in Catalysis Today 55 (200), pages 197-204.

The Applicant has faced the problem of providing a SOFC performing with a variety of fuels, substantially dry hydrocarbons, and especially methane, being included. Such SOFC should perform at low temperature, e.g. 600°C-800°C, so as to permit the use of cheaper material than those requested for performing at 900°C-1000°C. Last, but not least, long-term performances (redox stability) for any scale applications are desirable.

Applicant found that the use of Fe/Co ceramic as anode material provides the SOFC with the desired characteristics of enduring efficiency and energy produced with different fuels, comprising dry hydrocarbons, when mixed with a doped ceria.

The present invention thus relates to a solid oxide fuel cell including a cathode, an anode and at least an electrolyte membrane disposed between said anode and said cathode, wherein said anode comprises a ceramic containing at least one of cobalt and iron, said ceramic being mixed with doped ceria.

Preferably said ceramic has a perovskite structure or a perovskite-related structure.

Preferably the anode of the invention comprises a ceramic containing cobalt and iron.

Examples of ceramic useful for the anode of the invention can have a formula

- $M_{2-x}Sr_xFe_{2-y}Coy0_{5\pm\delta}$ wherein M is Ca or a rare earth element; x and y are independently equal to a value comprised between 0 and 2 included, and 5 is from stoichiometry; or
- $M_xSr_{1-x}Fe_{1.5-y}CO_yO_{3+\delta}$ wherein Ms is Ca or a rare earth element; wherein x and y are independently equal to a value comprised between 0 and 0.7 included, and $\delta$ is from stoichiometry.

A ceramic for the anode of the invention can be $La_{0.8}Sr_{0.2}FeO_3$.

Also, a ceramic according to the invention can be a lanthanum strontium cobalt iron oxide having, for example, a general formula $La_{1-x}Sr_xCO_{1-y}Fe_yO_{3-\delta}$, wherein x and y are independently equal to a value comprised between 0 and 1 included, and $\delta$ is from stoichiometry.

Preferred is a lanthanum strontium cobalt iron oxide of formula $La_{0.6}Sr_{0.4}CO_{0.2}Fe_{0.8}O_{3-\delta}$ (hereinafter referred

to as LSCF-80).

Preferably, the anode of the present invention is metal-free. With metal-free it is intended that none of the elements present in the anode is in metallic form.

Preferably, the ratio ceramic/doped ceria in the anode ranges from about 50:50 to about 95:5, more preferably from about 60:40 to about 80:20.

Examples of doped ceria useful in the present invention are gadolinia-doped ceria and samaria-doped ceria. Also, ceria can be doped with a cation selected from lanthanum, ytterbium, yttrium, calcium, terbium, neodymium or dysprosium.

The doped ceria is preferably doped in an amount of about 20% by mole. Preferred in this connection is $Ce_{0.8}Gd_{0.2}O_{1.90}$ (hereinafter referred to as CGO-20).

Preferably the doped ceria of the invention has a submicronic particle size. More specifically said particle size is lower than 100 nm.

A cathode for the solid oxide fuel cell of the invention can comprise a ceramic such as $La_{1-x}Sr_xMnO_{3-\delta}$, wherein x and y are independently equal to a value comprised between 0 and 1 included and $\delta$ is from stoichiometry, for example a $La_{0.6}Sr_{0.4}MnO_3$, or $La_{1-x}Sr_xCO_{1-y}FeyO_{3-\delta}$, as disclosed above, optionally combined with a doped ceria. Preferably such ceramic for the cathode is a perovskite structure or a perovskite-related structure.

The electrolyte membrane of the present invention may comprise a doped ceria selected from those listed in connection with the anode composition.

In a SOFC configuration wherein the electrolyte membrane is not supporting, i.e. an electrode supported SOFC, the electrolyte membrane may comprise any kind of suitable ceramic material, for example the above mentioned doped ceria or yttria stabilized zirconia (YSZ).

In another aspect, the present invention relates to a method for producing energy comprising the steps of:

- feeding at least one fuel in an anode side of a solid oxide fuel cell comprising an anode comprising a ceramic containing at least one of cobalt and iron, said ceramic being mixed with doped ceria, a cathode and at least an electrolyte membrane disposed between said anode and said cathode;
- feeding an oxidant in a cathode side of said solid oxide fuel cell; and
- oxidizing said at least one fuel in said solid oxide fuel cell, resulting in production of energy.

Preferably, the at least one fuel is selected from hydrogen; carbon oxide; an alcohol, e.g. methanol, ethanol, propanol; a hydrocarbon in gaseous form, e.g. methane, ethane, propane, butane, natural gas, reformed gas, biogas, syngas and mixture thereof, either in the presence of water or substantially dry; or a hydrocarbon in liquid form, e.g. diesel, toluene, kerosene, jet fuels (JP-4, JP-5, JP-8, etc). Preferred for the present invention is substantially dry methane.

As "substantially dry" it is intended that the water content is lower than 100 ppm.

The method of the invention can provide an internal reforming phase at the anode side when an appropriate amount of water is used in combination with a fuel other than hydrogen.

The invention will be further illustrated hereinafter with reference to the following examples and figures, wherein

- Figure 1 illustrates a schematic view of a solid oxide fuel cell;
- Figure 2 illustrates X-ray diffraction (XRD) pattern of a CGO-20 powders as prepared in example 1 treated at different temperatures;
- Figure 3 shows polarization and power density measurements of a cell according to the invention;
- Figure 4 illustrates chrono-amperometric evaluation of a cell according to the invention

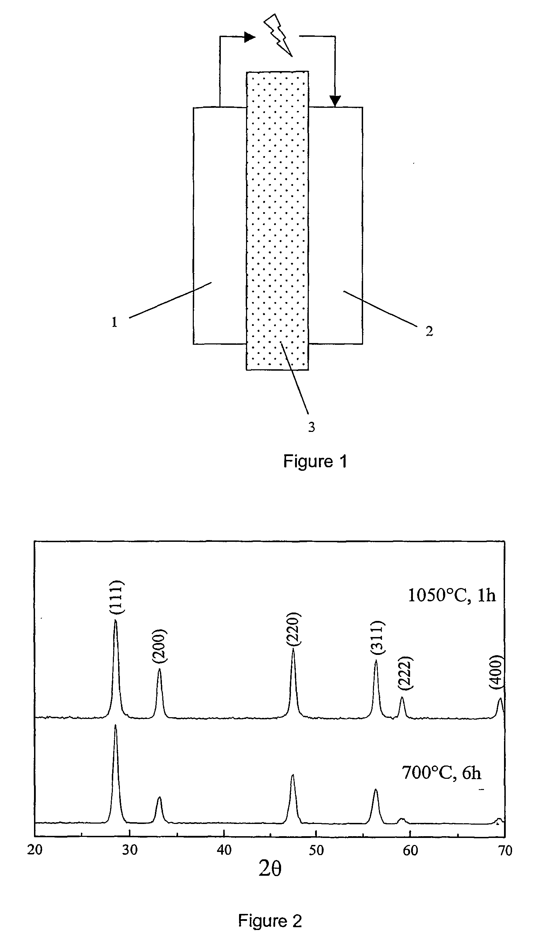

Figure 1 schematically illustrates a solid oxide fuel cell comprising anode 1, cathode 2, and electrolyte membrane 3. The arrows indicate the electron flow from anode to cathode during operation.

Example 1

LSCF-CGO-LSCF/CGO

A solid oxide fuel cell with the following structure and composition was prepared and tested:

Cathode: Composition: LSCF-80
Thickness: ~20μm

Electrolyte membrane:  Composition: CGO-20

Thickness: 300 μm

Anode:  Composition: 30% wt. of CGO-20 + 70% wt of LSCF -80

Thickness: ~20 μm.

1. Electrolyte preparation

a) CGO-20 powder synthesis

A solution of 12.6 g of oxalic acid (Aldrich 99.999%) in 250 ml of $H_2O$ was brought to pH=6.5 with NaOH (0.1 M) (Aldrich). 8.0 g. of $Ce(NO_3)_3.6H_2O$ (Aldrich 99.99%) and 2.078 g $Gd(NO_3)_3.6H_2O$ (Aldrich 99.99%) were added to 50 ml of $H_2O$ and stirred up to complete dissolution. This cationic solution was dropwise added to the oxalic solution to give a ratio 1 mol $Ce^{3+}$:~6mol $H_2C_2O_4$ and 1mol $Gd^{3+}$:~6mol $H_2C_2O_4$. The formed precipitate was filtered, thrice washed with water and dried at 100°C for 4 hours. The pH of the water used for washing was up to 6.5. The dried powder was crashed and crystallised at 700°C for 4h. A CGO-20 nanopowder (4 g) was obtained. The nanopowder has a particle size of 26 nm measured from the XRD pattern (Fig.2) by line broadening measurements using the Scherrer equation.

$$ t = \frac{K \times \lambda}{B \cos \theta} $$

wherein
K is the shape factor of the average crystallite;
$\ell$ is the wavelength,
β (rad) is the full width at half maximum of an individual peak, and θ (rad) is the peak position (2θ/2).

b) CGO-20 electrolyte membrane preparation.

CGO-20 powder of point a) was thermally treated at 1050°C for 1 h, then uniaxially pressed at 300 MPa, and the resulting pellet was thermally treated at 1450°C for 6 hours to give a membrane about 300 μm thick, with a relative density (experimental density/theoretical density) higher than 95%.

2. Cathode preparation

LSFC-80 powder (10 g; single perovskite phase, primary particle mean size 9 nm, BET surface area: 4.12 $m^2$/g, Praxair) was homogenised in a ball milling in 10 ml ethanol for 14h. Then, is the slurry is diluted and well dispersed in a ultrasonic bath for 4 hours taking 1 g slurry and adding 15 ml of ethanol. The resulting solution was sprayed for 3 min by an aerograph device onto the electrolyte membrane which is maintained at 400°C. Then the cathode and electrode/ electrolyte membrane interface were sintered at 1100°C for 2 hours in air conditions with a heating and cooling ramp of 5°C/min.

3. Anode preparation

LSFC-80 powder (7 g; single perovskite phase, primary particle mean size 9 nm, BET surface area: 4.12 $m^2$/g, Praxair) was homogenised in an agate mortar with CGO-20 (3 g prepared from exampla 1.a-b). Then, the mixture is ball milled in 10 ml ethanol for 14h. Then, is the slurry is diluted and well dispersed in a ultrasonic bath for 4 hours taking 1 g slurry and adding 15 ml of ethanol. The resulting solution was sprayed for 3 min by an aerograph device onto the electrolyte membrane which is maintained at 400°C. Then the electrode and electrode/electrolyte membrane interface were sintered at 800°C for 1 hour and then at 1100°C for 2 hours in air conditions with a heating and cooling ramp of 5°C/min.

4. Polarisation measurement.

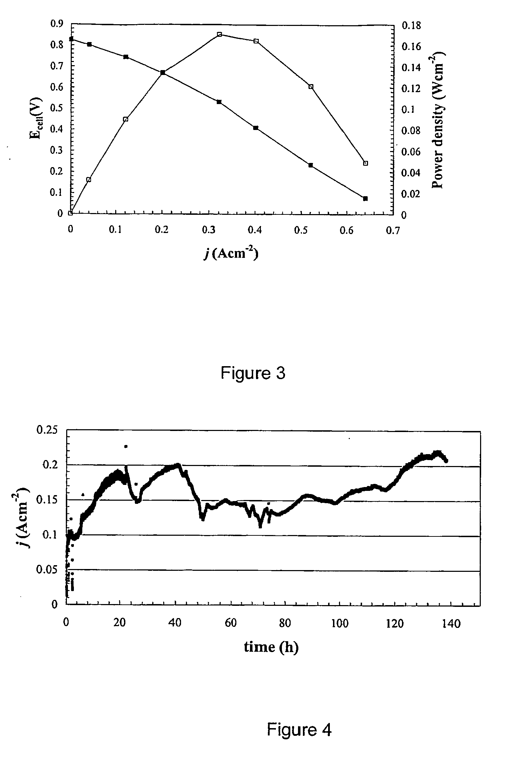

The cell evaluation was carried out operating at a temperature of 800°C with substantially dry $CH_4$. The results are set forth in Figure 3, wherein the black and blank square represent, respectively, the polarization and the power density curves, respectively. At 0.6V the cell showed a current density close to 0.3 A/cm$^2$. The maximum power density reached was 170 mW/cm$^2$.

Finally, a chrono-amperometric measurement, i.e. the time-variation of the current density of the cell, was effected at 800°C and 0.6V. The cell was made to perform for 140h in dry $CH_4$ and static air (Figure 4), carrying out several experiments reaching a peak of power density of 140 mW/cm$^2$.

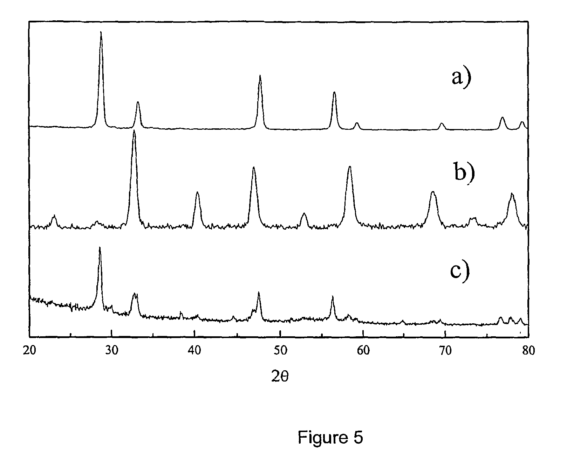

After cooling down the electrochemical cell, the anode was analyzed for verifying its composition and also the presence of carbon. The XRD analysis revealed no significant degradation of the LSCF/CGO anode after 140h of working time. In Figure 5, patterns a) and b) respectively show the XRD of pure CGO and LSCFO initial powders as a reference. In Figure 5, pattern c) is the XRD of the anode material after working for 140h. All of the three XRD patterns were analyzed using the grazing angle mode (0.5° incidence angle). The grazing angle mode is more sensible to the surface composition (degradation) of the material to be analyzed and can reveal more precisely any trace of carbon deposition. From the XRD analysis can be observed that the LSCFO and the CGO of the anode after 140h of working time show no significant degradation. Moreover, there is no presence of carbon deposition which usually appears at 2θ=26.7°. Moreover, the possible presence of carbon was investigated by the elemental CHSN-O analyzer (Carlo Erba). From this analysis no carbon deposition was detected. This is a very important point in view of the state of the art. S. Tao e J.T.S Irvine *supra* describe that after running the fuel cell in wet $CH_4$ at 900°C for 7h and cooling down traces of carbon are detected.

Therefore, the combination of the good mixed conducting properties of LSCFO together with the ionic conducting properties of the CGO allows to use this composite as an anode for direct oxidation of dry $CH_4$ at $T \leq 800$°C.

## Claims

1. Solid oxide fuel cell including a cathode, an anode and at least an electrolyte membrane disposed between said anode and said cathode, wherein said anode comprises a ceramic containing at least one of cobalt and iron, said ceramic being mixed with doped ceria.

2. Solid oxide fuel cell according to claim 1 wherein the ceramic is a perovskite structure or a perovskite-related structure.

3. Solid oxide fuel cell according to claim 1 wherein the ceramic contains cobalt and iron.

4. Solid oxide fuel cell according to claim 1 wherein the ceramic has a formula $M_{2-x}Sr_xFe_{2-y}CO_yO_{5\pm\delta}$ wherein M is Ca or a rare earth element; x and y are independently equal to a value comprised between 0 and 2, extremes included, and δ is from stoichiometry

5. Solid oxide fuel cell according to claim 1 wherein the ceramic has a formula $M_xSr_{1-x}Fe_{1.5-y}CO_yO_{3+\delta}$ wherein M is Ca or a rare earth element; wherein x and y are independently equal to a value comprised between 0 and 0.7, extremes included, and δ is from stoichiometry.

6. Solid oxide fuel cell according to claim 5 wherein the ceramic is $La_{0.8}Sr_{0.2}FeO_3$.

7. Solid oxide fuel cell according to claim 1 wherein the ceramic is a lanthanum strontium cobalt iron oxide.

8. Solid oxide fuel cell according to claim 7 wherein the lanthanum strontium cobalt iron oxide has a general formula $La_{1-x}Sr_xCO_{1-y}Fe_yO_{3-\delta}$, wherein x and y are independently equal to a value comprised between 0 and 1, extremes included and δ is from stoichiometry.

9. Solid oxide fuel cell according to claim 8 wherein a lanthanum strontium cobalt iron oxide has a formula $La_{0.6}Sr_{0.4}CO_{0.2}Fe_{0.8}O_{3-\delta}$.

10. Solid oxide fuel cell according to claim 1 wherein the anode is metal-free.

11. Solid oxide fuel cell according to claim 1 wherein the ceramic is mixed with the doped ceria in a ceramic/doped ceria ratio ranging from 50:50 to 95:5.

**12.** Solid oxide fuel cell according to claim 11 wherein the ratio ranges from 60:40 to 80:20.

**13.** Solid oxide fuel cell according to claim 1 wherein the doped ceria is selected from gadolinia-doped ceria and samaria-doped ceria.

**14.** Solid oxide fuel cell according to claim 1 wherein ceria is doped with a cation selected from lanthanum, ytterbium, yttrium, calcium, terbium, neodymium or dysprosium.

**15.** Solid oxide fuel cell according to claim 1 wherein the doped ceria is doped in an amount of about 20% by mole.

**16.** Solid oxide fuel cell according to claim 1 wherein the doped ceria $Ce_{0.8}Gd_{0.2}O_{1.90}$.

**17.** Solid oxide fuel cell according to claim 1 wherein the doped ceria has a submicronic particle size.

**18.** Solid oxide fuel cell according to claim 17 wherein the doped ceria has a particle size is lower than 100 nm.

**19.** Solid oxide fuel cell according to claim 1 wherein the cathode comprises a ceramic selected from the group consisting of

- $La_{1-x}Sr_xMnO_{3-\delta}$, wherein x and y are independently equal to a value comprised between 0 and 1, extremes included and $\delta$ is from stoichiometry; and
- $La_{1-x}Sr_xCo_{1-y}FeyO_{3-\delta}$, wherein x and y are independently equal to a value comprised between 0 and 1, extremes included and $\delta$ is from stoichiometry.

**20.** Solid oxide fuel cell according to claim 1 wherein the cathode comprises a doped ceria.

**21.** Solid oxide fuel cell according to claim 1 wherein the electrolyte comprises a doped ceria.

**22.** Solid oxide fuel cell according to claim 1 wherein the electrolyte membrane is not supporting.

**23.** Method for producing energy comprising the steps of:

- feeding at least one fuel in an anode side of a solid oxide fuel cell comprising an anode comprising a ceramic containing at least one of cobalt and iron, said ceramic being mixed with doped ceria, a cathode and at least an electrolyte membrane disposed between said anode and said cathode;
- feeding an oxidant in a cathode side of said solid oxide fuel cell; and
- oxidizing said at least one fuel in said solid oxide fuel cell, resulting in production of energy.

**24.** Method according to claim 23 wherein the at least one fuel is hydrogen.

**25.** Method according to claim 23 wherein the at least one fuel is an alcohol.

**26.** Method according to claim 23 wherein the at least one fuel is a hydrocarbon in gaseous form.

**27.** Method according to claim 26 wherein the hydrocarbon is substantially dry.

**28.** Method according to claim 23 wherein the at least one fuel is a hydrocarbon in liquid form.

**29.** Method according to claim 23 wherein the at least one fuel is substantially dry methane.

**30.** Method according to claim 23 wherein the fuel is internally reformed in the anode side.

**Patentansprüche**

**1.** Festoxid-Brennstoffzelle, enthaltend eine Kathode, eine Anode und mindestens eine Elektrolytmembran, die zwischen der Anode und der Kathode angeordnet ist, worin die Anode ein keramisches Material umfaßt, das mindestens eines von Kobalt und Eisen enthält, wobei das keramische Material mit dotiertem Ceroxid gemischt ist.

**2.** Festoxid-Brennstoffzelle gemäß Anspruch 1, worin das keramische Material eine Perovskitstruktur oder eine Perovskit-ähnliche Struktur ist.

**3.** Festoxid-Brennstoffzelle gemäß Anspruch 1, worin das keramische Material Kobalt und Eisen enthält.

**4.** Festoxid-Brennstoffzelle gemäß Anspruch 1, worin das keramische Material eine Formel $M_{2-x}Sr_xFe_{2-y}CO_yO_{5\pm\delta}$ aufweist, worin M Ca oder ein Seltenerdelement ist, x und y unabhängig voneinander gleich einem Wert sind, der zwischen 0 und 2 liegt, wobei die Extremwerte eingeschlossen sind, und sich $\delta$ aus der Stöchiometrie ergibt.

**5.** Festoxid-Brennstoffzelle gemäß Anspruch 1, worin das keramische Material eine Formel $M_xSr_{1-x}Fe_{1,5-y}CO_yO_{3\pm\delta}$ aufweist, worin M Ca oder ein Seltenerdelement ist, x und y unabhängig voneinander gleich einem Wert sind, der zwischen 0 und 0,7 liegt, wobei die Extremwerte eingeschlossen sind, und sich $\delta$ aus der Stöchiometrie ergibt.

**6.** Festoxid-Brennstoffzelle gemäß Anspruch 5, worin das keramische Material $La_{0,8}Sr_{0,2}FeO_3$ ist.

**7.** Festoxid-Brennstoffzelle gemäß Anspruch 1, worin das keramische Material ein Lanthanstrontiumkobalteisenoxid ist.

**8.** Festoxid-Brennstoffzelle gemäß Anspruch 7, worin das Lanthanstrontiumkobalteisenoxid eine allgemeine Formel $La_{1-x}Sr_xCo_{1-y}Fe_yO_{3-\delta}$ aufweist, worin x und y unabhängig voneinander gleich einem Wert sind, der zwischen 0 und 1 liegt, wobei die Extramwerte eingeschlossen sind, und sich $\delta$ aus der Stöchiometrie ergibt.

**9.** Festoxid-Brennstoffzelle gemäß Anspruch 8, worin ein Lanthanstrontiumkobalteisenoxid eine Formel $La_{0,6}Sr_{0,4}Co_{0,2}Fe_{0,8}O_{3-\delta}$ aufweist.

**10.** Festoxid-Brennstoffzelle gemäß Anspruch 1, worin die Anode metallfrei ist.

**11.** Festoxid-Brennstoffzelle gemäß Anspruch 1, worin das keramische Material mit dem dotierten Ceroxid in einem Verhältnis keramisches Material/dotiertes Ceroxid im Bereich von 50:50 bis 95:5 gemischt wird.

**12.** Festoxid-Brennstoffzelle gemäß Anspruch 11, worin das Verhältnis im Bereich von 60:40 bis 80:20 liegt.

**13.** Festoxid-Brennstoffzelle gemäß Anspruch 1, worin das dotierte Ceroxid aus Gadoliniumoxid-dotiertem Ceroxid und Samariumoxid-dotiertem Ceroxid ausgewählt wird.

**14.** Festoxid-Brennstoffzelle gemäß Anspruch 1, worin das Ceroxid mit einem Kation dotiert ist, das aus Lanthan, Ytterbium, Yttrium, Kalzium, Terbium, Neodym oder Dysprosium ausgewählt wird.

**15.** Festoxid-Brennstoffzelle gemäß Anspruch 1, worin das dotierte Ceroxid in einer Menge von etwa 20 mol% dotiert ist.

**16.** Festoxid-Brennstoffzelle gemäß Anspruch 1, worin das dotierte Ceroxid $Ce_{0,8}Gd_{0,2}O_{1,90}$ ist.

**17.** Festoxid-Brennstoffzelle gemäß Anspruch 1, worin das dotierte Ceroxid eine Submikron-Teilchengröße aufweist.

**18.** Festoxid-Brennstoffzelle gemäß Anspruch 17, worin das dotierte Ceroxid eine Teilchengröße von kleiner als 100 nm aufweist.

**19.** Festoxid-Brennstoffzelle gemäß Anspruch 1, worin die Kathode ein keramisches Material umfaßt, das aus der Gruppe ausgewählt wird bestehend aus

- $La_{1-x}Sr_xMnO_{3-\delta}$, worin x und y unabhängig voneinander gleich einem Wert sind, der zwischen 0 und 1 liegt, wobei die Extremwerte eingeschlossen sind, und sich $\delta$ aus der Stöchiometrie ergibt, und
- $La_{1-x},Sr_xCo_{1-y}Fe_yO_{3-\delta}$, worin x und y unabhängig voneinander gleich einem Wert sind, der zwischen 0 und 1 liegt, wobei die Extremwerte eingeschlossen sind, und sich $\delta$ aus der Stöchiometrie ergibt.

**20.** Festoxid-Brennstoffzelle gemäß Anspruch 1, worin die Kathode ein dotiertes Ceroxid umfaßt.

**21.** Festoxid-Brennstoffzelle gemäß Anspruch 1, worin der Elektrolyt ein dotiertes Ceroxid umfaßt.

**22.** Festoxid-Brennstoffzelle gemäß Anspruch 1, worin die Elektrolytmembran nichttragend ist.

**23.** Verfahren zur Erzeugung von Energie, umfassend die folgenden Schritte:

- Einspeisen mindestens eines Brennstoffes in eine Anodenseite einer Festoxid-Brennstoffzelle, umfassend eine Anode, die ein keramisches Material umfaßt, das mindestens eines von Kobalt und Eisen enthält, wobei das keramische Material mit dotiertem Ceroxid gemischt ist, eine Kathode und mindestens eine Elektrolytmembran, die zwischen der Anode und der Kathode angeordnet ist;
- Einspeisen eines Oxidationsmittels in eine Kathodenseite der Festoxid-Brennstoffzelle und
- Oxidieren des mindestens einen Brennstoffes in der Festoxid-Brennstoffzelle, was zur Erzeugung von Energie führt.

**24.** Verfahren gemäß Anspruch 23, worin der mindestens eine Brennstoff Wasserstoff ist.

**25.** Verfahren gemäß Anspruch 23, worin der mindestens eine Brennstoff ein Alkohol ist.

**26.** Verfahren gemäß Anspruch 23, worin der mindestens eine Brennstoff ein Kohlenwasserstoff in gasförmiger Form ist.

**27.** Verfahren gemäß Anspruch 26, worin de Kohlenwasserstoff im wesentlichen trocken ist.

**28.** Verfahren gemäß Anspruch 23, worin der mindestens eine Brennstoff ein Kohlenwasserstoff in flüssiger Form ist.

**29.** Verfahren gemäß Anspruch 23, worin der mindestens eine Brennstoff im wesentlichen trockenes Methan ist.

**30.** Verfahren gemäß Anspruch 23, worin der Brennstoff intern an der Anodenseite deformiert wird.


**Revendications**

**1.** Pile à combustible à oxyde solide comprenant une cathode, une anode et au moins une membrane à électrolyte disposée entre ladite anode et ladite cathode, ladite anode comprenant une céramique contenant au moins soit du cobalt soit du fer, ladite céramique étant mélangée avec de l'oxyde de cérium dopé.

**2.** Pile à combustible à oxyde solide selon la revendication 1, dans laquelle la céramique correspond à une structure de type pérovskite ou à une structure apparentée à celle de la pérovskite.

**3.** Pile à combustible à oxyde solide selon la revendication 1, dans laquelle la céramique contient du cobalt et du fer.

**4.** Pile à combustible à oxyde solide selon la revendication 1, dans laquelle la céramique répond à une formule du type $M_{2-x}Sr_xFe_{2-y}Co_yO_{5+\delta}$ dans laquelle M représente un atome de calcium (Ca) ou un atome de terre rare ; x et y étant indépendamment égaux à une valeur comprise entre 0 et 2 inclus et $\delta$ s'accordant à la stoechiométrie.

**5.** Pile à combustible à oxyde solide selon la revendication 1, dans laquelle la céramique répond à une formule du type $M_xSr_{1-x}Fe1,_{5-y}Co_yO_{3+\delta}$, dans laquelle M représente un atome de calcium (Ca) ou un atome de terre rare; x et y étant indépendamment égaux à une valeur comprise entre 0 et 0,7 inclus et $\delta$ s'accordant à la stoechiométrie.

**6.** Pile à combustible à oxyde solide selon la revendication 5, dans laquelle la céramique a pour formule $La_{0,8}Sr_{0,2}FeO_3$.

**7.** Pile à combustible à oxyde solide selon la revendication 1, dans laquelle la céramique est un oxyde de lanthane strontium cobalt fer.

**8.** Pile à combustible à oxyde solide selon la revendication 7, dans laquelle l'oxyde de lanthane strontium cobalt fer répond à la formule générale $La_{1-x}Sr_xCo_{1-y}Fe_yO_{3-\delta}$, x et y étant indépendamment égaux à une valeur comprise entre 0 et 1 inclus et $\delta$ s'accordant à la stoechiométrie.

**9.** Pile à combustible à oxyde solide selon la revendication 8, dans laquelle un oxyde de lanthane strontium cobalt fer a pour formule $La_{0,6x}Sr_{0,4}Co_{0,2}Fe_{0,8}O_{3-\delta}$.

**10.** Pile à combustible à oxyde solide selon la revendication 1, dans laquelle l'anode est sans métal,

**11.** Pile à combustible à oxyde solide selon la revendication 1, dans laquelle la céramique est mélangée à l'oxyde de cérium dopé selon un rapport céramique/oxyde de cérium dopé compris entre 50/50 et 95/5.

**12.** Pile à combustible à oxyde solide selon la revendication 11, dans laquelle le rapport est compris entre 60/40 et 80/20.

**13.** Pile à combustible à oxyde solide selon la revendication 1, dans laquelle l'oxyde de cérium dopé est choisi entre l'oxyde de cérium dopé par de l'oxyde de gadolinium et de l'oxyde de cérium dopé par de l'oxyde de samarium.

**14.** Pile à combustible à oxyde solide selon la revendication 1, dans laquelle l'oxyde de cérium est dopé par un cation choisi parmi le lanthane, l'ytterbium, l'yttrium, le calcium, le terbium, le néodyme ou le dysprosium.

**15.** Pile à combustible à oxyde solide selon la revendication 1, dans laquelle l'oxyde de cérium dopé est dopé à hauteur de 20 % en mole.

**16.** Pile à combustible à oxyde solide selon la revendication 1, dans laquelle l'oxyde de cérium dopé a pour formule $Ce_{0,8}Gd_{0,2}O_{1,90}$,

**17.** Pile à combustible à oxyde solide selon la revendication 1, dans laquelle l'oxyde de cérium a une taille de particule inférieure au micromètre,

**18.** Pile à combustible à oxyde solide selon la revendication 17, dans laquelle l'oxyde de cérium a une taille de particule inférieure à 100 nm.

**19.** Pile à combustible à oxyde solide selon la revendication 1, dans laquelle la cathode contient une céramique choisie dans l'ensemble constitué de

- $La_{1-x}Sr_xMnO_{3-\delta}$, x et y étant indépendamment égaux à une valeur comprise entre 0 et 1 inclus et δ s'accordant à la stoechiométrie ;
- et $La_{1-x}Sr_xCo_{1-y}FeyO_{3-\delta}$, x et y étant indépendamment égaux à une valeur comprise entre 0 et 1 inclus et δ s'accordant à la stoechiométrie.

**20.** Pile à combustible à oxyde solide selon la revendication 1, dans laquelle la cathode contient un oxyde de cérium dopé.

**21.** Pile à combustible à oxyde solide selon la revendication 1, dans laquelle l'électrolyte contient un oxyde de cérium dopé.

**22.** Pile à combustible à oxyde solide selon la revendication 1, dans laquelle la membrane d' électrolyte ne soutient pas.

**23.** Procédé de production d'énergie comprenant les étapes suivantes :

- introduire au moins un combustible d'un côté anode d'une pile à combustible à oxyde solide comprenant : une anode contenant une céramique où se trouve au moins soit du cobalt soit du fer, ladite céramique étant mélangée à de l'oxyde de cérium dopé ; une cathode ; et au moins une membrane d'électrolyte disposée entre ladite anode et ladite cathode;
- introduire un oxydant dans un côté cathode de ladite pile à combustible à oxyde solide ;
- et oxyder ledit combustible au nombre d'au moins un dans ladite pile à combustible à oxyde solide, ce qui produit de l'énergie.

**24.** Procédé selon la revendication 23, dans lequel le combustible au nombre d'au moins un est de l'hydrogène.

**25.** Procédé selon la revendication 23, dans lequel le combustible au nombre d'au moins un est un alcool.

**26.** Procédé selon la revendication 23, dans lequel le combustible au nombre d'au moins un est un hydrocarbure sous forme gazeuse.

**27.** Procédé selon la revendication 23, dans lequel l'hydrocarbure est pratiquement sec.

**28.** Procédé selon la revendication 23, dans lequel le combustible au nombre d'au moins un est sous forme liquide.

**29.** Procédé selon la revendication 23, dans lequel le combustible au nombre d'au moins un est pratiquement du méthane sec.

**30.** Procédé selon la revendication 23, dans lequel le combustible est reformé par voie interne du côté de l'anode.

Figure 1

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0052780 A

**Non-patent literature cited in the description**

- **S. TAO ; J.T.S IRVINE.** *Nature Materials,* 2003, vol. 2, 320-323
- **V.V. KHARTON et al.** *Journal of Materials Science,* 2001, vol. 36, 1105-1117
- **M.WESTON et al.** *Solid State Ionics,* 1998, vol. 113 (115), 247-251
- **A. HARTLEY et al.** *Catalysis Today,* vol. 55 (200), 197-204